# EUROPEAN PATENT APPLICATION

(11) **EP 0 621 067 A1**
(43) Date of publication of application: **26.10.1994**
(21) Application number: 94200895.4
(22) Date of filing: 31.03.1994
(51) Int. Cl.: B01D 35/02

(54) **Water filter**

(30) Priority: 01.04.1993 IL 10526093
(71) Applicant: ODIS IRRIGATION EQUIPMENT LTD., Petach Tikva 49130 (IL)
(72) Inventor: Gil, Shmuel, Kfar-Saba (IL); Belogorodsky, Joshua, Tel Aviv (IL)
(74) Representative: Boelsma, Gerben Harm, Ir.

(57) **Abstract**

A water filtration device which includes a housing and a filtration assembly located within the housing, wherein the filtration assembly has a water inlet, and includes a cylindrical support adapted for mounting in the housing and having formed therein a plurality of outlet apertures; a generally cylindrical filter mesh disposed within the support; and a water circulating plate disposed in the inlet of the filtration assembly, characterized in that the support has a spiral groove on an inner surface thereof, the spiral groove being arranged to permit exit of filtered water through the mesh, along the groove, and out through any of the outlet apertures.

## Description

### FIELD OF THE INVENTION

The present invention relates to filtering devices in general and, in particular, to screen filters for water.

### BACKGROUND OF THE INVENTION

A variety of water filtering devices are known in the art for achieving various degrees of filtration of different grades of water. Such filters generally include a cylindrical filter body inside of which a filter mesh is mounted in a cylindrical filter support. These filters are adapted to permit flow of water from the inside of the screen mesh to the outside, or vice versa, then out through the outlet.

One type of filter in use today is the circulating water filter which includes a circulating disk or plate at the water inlet defining a number of angled bores through which the water flows. The water flows from inside the filter mesh to the outside. The angled bores in the circulating plate cause the incoming water to enter at an angle relative to the mesh, thereby helping to dislodge particulate matter which has stuck to the mesh. This self-cleaning action is a great advantage over other filters. In order to prevent the mesh from "sticking" to the filter support between the perforations, a nylon screen can be inserted between the mesh and the filter support, as a partial solution.

A disadvantage of known filtration devices is that blockage of screen mesh adjacent a hole in the perforated support is equivalent to the blockage of the hole. Thus, over the lifetime of the filtering device, water to be filtered has to pass through an area of mesh that decreases as the holes become blocked, thereby permitting a decreasing volumetric throughflow of filtered water, until the mesh becomes completely blocked.

In addition, conventional filter devices include a residue collection unit which is mounted on the end of the filter body by means of a heavy, separate cover.

### SUMMARY OF THE INVENTION

It is an object of the present invention to provide an improved self-cleaning water filtration device which overcomes disadvantages of the prior art.

There is thus provided in accordance with an embodiment of the invention, a water filtration device which includes a housing and a filtration assembly located within the housing, wherein the filtration assembly has a water inlet, and includes
a cylindrical support adapted for mounting in the housing and having formed therein a plurality of outlet apertures;
a generally cylindrical filter mesh disposed within the support; and
a water circulating plate disposed in the inlet of the filtration assembly,
characterized in that the support has a spiral groove on an inner surface thereof, the spiral groove being arranged to permit exit of filtered water through the mesh, along the groove, and out through any of the outlet apertures.

Additionally in accordance with an embodiment of the invention, the spiral groove contacts substantially all of the apertures of the support and is adapted to guide filtered water from the filter mesh out through any available outlet aperture in the cylindrical support.

Further in accordance with an embodiment of the invention, there is also provided a residue collection chamber which is integrally formed with the cylindrical support.

### BRIEF DESCRIPTION OF THE DRAWINGS

The present invention will be further understood and appreciated from the following detailed description, taken in conjunction with the drawings, in which:
Fig. 1 is an exploded schematic side view in partial section of a water filtering device constructed and operative in accordance with the invention; and
Fig. 2 is a sectional view of a portion of the device of Fig. 1.

### DETAILED DESCRIPTION OF A PREFERRED EMBODIMENT

The present invention relates to water filtering devices. As in all filtering devices, a major factor is the volumetric flow of filtered water per unit time. This is dependent not only on the size of the device, but also on the effective or available filtering area of a screen mesh employed in the device.

It will be appreciated from the following description that the present invention provides an effective or available screen mesh filtering area which is substantially the entire mesh area, and not merely the mesh area adjacent apertures in a perforated mesh support.

It has been found by the inventors that the present invention permits as much as a threefold increase in the volumetric water flow therethrough over conventional filtering devices. This is achieved by providing a spiral groove along the inner surface of the perforated support opposite the mesh, thereby preventing "intimate" contact between the screen mesh and portions of the perforated support between the holes.

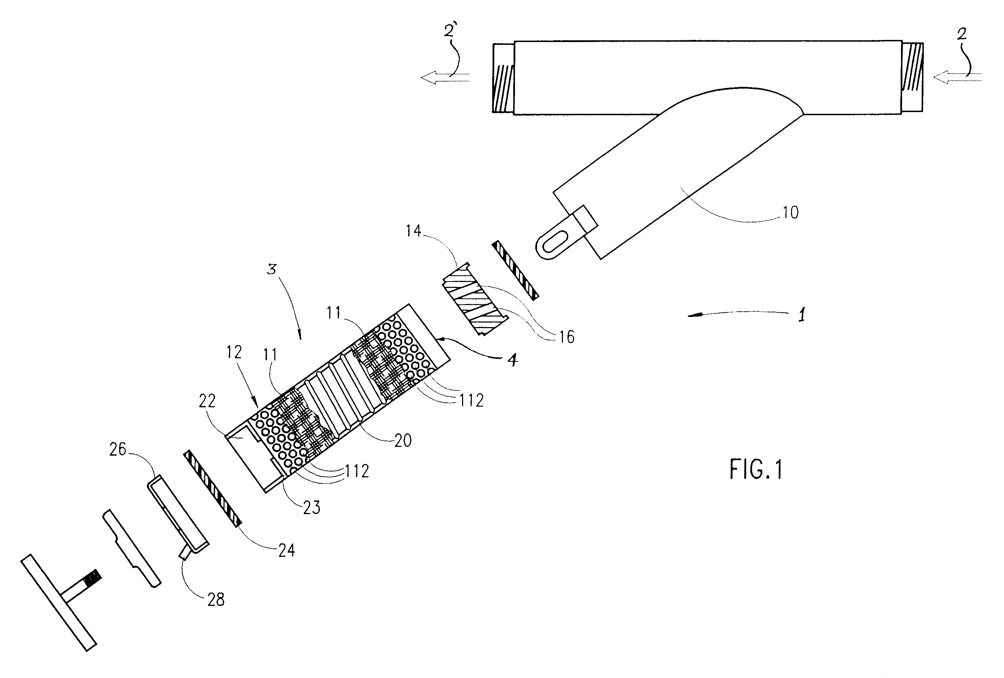

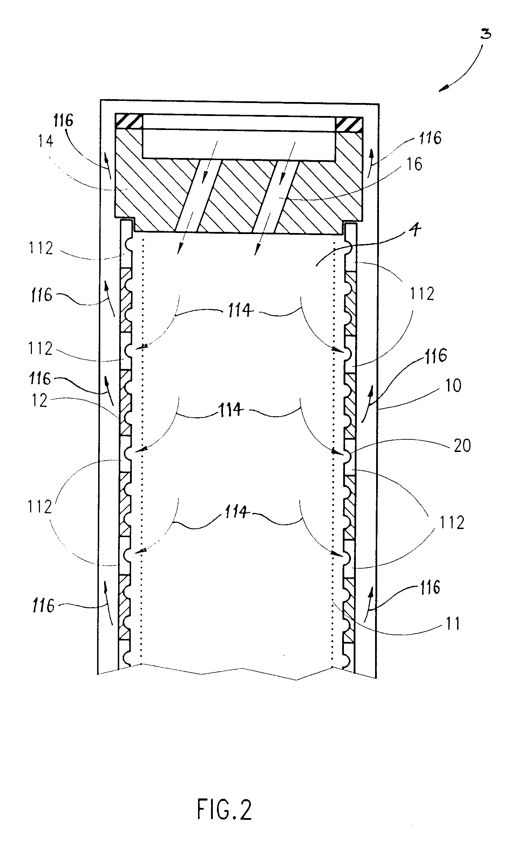

Referring now to Figs. 1 and 2 there is shown a filtering device 1 constructed and operative in accordance with the present invention, associated with a water supply indicated schematically by arrows 2 and 2'. Arrow 2 represents unfiltered water, upstream of device 1, and arrow 2' represents filtered water, downstream of device 1.

Device 1 includes a filter body or housing 10, and a generally cylindrical filtration assembly 3 located within body 10. Assembly 3 includes a generally cylindrical filter mesh 11 preferably supported internally of a perforated support 12 and coaxially therewith. Support 12 is adapted for mounting within housing 10, in spaced relation therefrom.

Typically, perforated support 12 is made of PVC, although it may alternatively be made of any other suitable material. A circulating plate or disc 14 is provided at an inlet 4 to the filtration assembly 3 and includes angled inlet apertures 16 which cause the incoming water to flow in a spiral flow path substantially parallel to the filter mesh 11, thereby providing a self-cleaning action for the filter mesh.

It is a particular feature of the present invention that a spiral groove 20 is formed on the interior surface of perforated support 12. Spiral groove 20 provides a filtered water flow path leading from the apertures in filter mesh 11 to the outlet apertures 112 in the perforated support 12. In this way, water is permitted to flow through any portion of filter mesh 11, as indicated in Fig. 2 by arrows 114, and to flow out through any open aperture 112 in support 12 and, unlike the prior art, not only through those support apertures which are directly opposite the apertures in the filter mesh. Outflow of filtered water from filtration assembly is indicated schematically by arrows 116.

Strength considerations limit the number and size of outlet apertures in a given perforated support. The provision of spiral groove 20 is operative to increase the effective filtration rate by almost three times, as compared with a conventional filter device of the same size, without increasing the number of holes and, thus, without weakening the support. For example, in a typical conventional 3 inch filter, the screen area is 0.120 m2 and the total area of the holes of the support is 0.015 m2. Adding a spiral groove according to the invention increases the effective filtration area from 0.015 to 0.120 m2, that is, eight times higher.

It will be appreciated that the periodicity of the spiral (i.e., distance between turns) can be varied. However, it is most preferable that the spiral be such that it communicates with substantially all of the holes in the support as well as the apertures in the filter mesh.

According to a preferred embodiment of the invention, the filter device of the invention also includes a residue collection chamber 22 in which filtered particulate matter collects. Collection chamber 22 is separated from the main water flow portion of filter body 10 by an annular, conical disk 23 which prevents back flow of the debris. The collection chamber is closed by a sealing gasket 24 and a flat cover 26 which includes a drain valve 28.

It is a particular feature of the invention that the collection chamber 22 is integrally formed with perforated support 12, thereby obviating the necessity for the conventional separate collection chamber with its cumbersome and heavy mounting cover which couples the chamber to the filter body.

It will be appreciated by those skilled in the art that the invention is not limited to what has been described hereinabove by way of example. Rather, the scope of the invention is limited solely by the claims which follow.

## Claims

1. A water filtration device comprising:
a housing; and
a filtration assembly located within said housing, having a water inlet, and comprising:
a cylindrical support adapted for mounting in said housing and having formed therein a plurality of outlet apertures;
a generally cylindrical filter mesh disposed within said support; and
a water circulating plate disposed in said inlet of said filtration assembly,
characterized in that said support has a spiral groove on an inner surface thereof, said spiral groove being arranged to permit exit of filtered water through said mesh, along said groove, and out through any of said outlet apertures.

2. A water filtration device according to claim 1, and wherein said spiral groove contacts substantially all of said apertures of said support and is adapted to guide filtered water from said filter mesh out through any available outlet aperture in said cylindrical support.

3. A water filtration device according to claim 1, and further comprising a residue collection chamber integrally formed with said cylindrical support.

4. A water filtration device according to claim 1 and wherein said cylindrical support is formed of PVC.

5. A water filtration device comprising:
a housing; and
a filtration assembly located within said housing, having a water inlet, and comprising:
a cylindrical support adapted for mounting in said housing and having formed therein a plurality of outlet apertures;
a generally cylindrical filter mesh disposed within said support;
a water circulating plate disposed in said inlet of said filtration assembly; and
a residue collection chamber integrally formed with said cylindrical support.

6. A water filtration device according to claim 5, and wherein said support has a spiral groove on an inner surface thereof, said spiral groove being arranged to permit exit of filtered water through said mesh, along said groove, and out through any of said outlet apertures.

7. A water filtration device according to claim 6, and wherein said spiral groove contacts substantially all of said apertures of said support and is adapted to guide filtered water from said filter mesh out through any available outlet aperture in said cylindrical support.

8. A water filtration device according to claim 5, and wherein said cylindrical support is formed of PVC.
